# FASCICULE DE BREVET EUROPEEN

(11) **EP 3 142 766 B1**
(45) Date de publication et mention de la délivrance du brevet: **29.12.2021**
(21) Numéro de dépôt: 15722219.1
(22) Date de dépôt: 13.05.2015
(51) Int. Cl.: B01D 15/22, B01D 15/14, G01N 30/60

(54) **UNITE DE DISTRIBUTION DE FLUIDE POUR UNE COLONNE DE CHROMATOGRAPHIE**
FLÜSSIGKEITSVERTEILUNGSEINHEIT FÜR EINE CHROMATOGRAFIESÄULE
FLUID DISTRIBUTION UNIT FOR A CHROMATOGRAPHY COLUMN

(30) Priorité: 16.05.2014 FR 1401117
(43) Date de publication de la demande: 22.03.2017
(73) Titulaire: Novasep Process Solutions, 01700 Saint-Maurice-de-Beynost (FR)
(72) Inventeur: VALERY, Eric, F-54425 Saulxures-lès-Nancy (FR); PRIEUR, Cédric, F-69740 Genas (FR); PAUTAL, Nicolas, F-38390 La Balme les grottes (FR); OLIVEIRA, Stéphane, F-01120 Montluel (FR)
(74) Mandataire: Bandpay & Greuter
(86) Numéro de dépôt international: PCT/EP2015/060710
(87) Numéro de publication internationale: WO 2015/173370

(56) Documents cités:
- EP-A2- 0 074 815
- WO-A1-2006/055222
- FR-A1- 2 708 480
- FR-A1- 2 961 112
- US-A- 4 582 608
- US-A1- 2004 140 007
- US-A1- 2004 140 252

## Description

### DOMAINE DE L'INVENTION

La présente invention concerne une unité de distribution de fluide pour une colonne comportant un lit fixe de particules, telle qu'une colonne de chromatographie.

### ARRIERE-PLAN TECHNIQUE

La chromatographie est une méthode de séparation basée sur la différence de rétention des composés d'un mélange sur une phase stationnaire. Les composés sont séparés en percolant un éluant liquide, gazeux ou supercritique dans un dispositif (en général une colonne cylindrique, ou d'une autre géométrie) rempli de phase stationnaire. Les composés progressent plus ou moins vite dans la colonne en fonction de leur cinétique de déplacement et de leur affinité avec le support chromatographique. Ils sont ainsi plus ou moins séparés.

Cette méthode est largement mise en œuvre comme technique d'analyse afin d'identifier et de quantifier les composés d'un mélange. Elle est également largement utilisée comme technique de purification industrielle.

La colonne de chromatographie étant remplie de phase stationnaire, elle est le lieu où se déroule la séparation des différents composés. Lors de la mise en œuvre de cette séparation il convient donc d'introduire les composés et l'éluant dans la colonne, et de les en extraire. Pour ce faire, on utilise des systèmes d'alimentation et de collecte placés à l'entrée et à la sortie de la colonne, par lesquels passent les fluides lors de la séparation.

Une colonne de chromatographie industrielle est composée dans la plupart des cas d'un fût cylindrique fermé de chaque côté par des planchers. Eventuellement, un piston peut être substitué à un des planchers, dans certaines applications, notamment pharmaceutiques.

La colonne est remplie d'une phase stationnaire (en générale des billes ayant une taille moyenne de quelques micromètres à quelques millimètres suivant les applications) au travers de laquelle percolent les composés à séparer et l'éluant. Une ou plusieurs cellules de séparation peuvent être présentes dans une même colonne. Les réseaux d'alimentation et de collecte sont situés sur les planchers de la colonne et maintiennent la phase stationnaire de chaque cellule de séparation. Ces réseaux servent également à répartir et à collecter à chaque instant le plus uniformément possible les fluides sur toute la surface de la phase stationnaire. L'efficacité de la séparation est donc influencée par la conception de ces réseaux, puisqu'il s'agit d'injecter un éluant provenant d'une conduite sur toute la surface du plancher d'une colonne ou de soutirer cet éluant du plancher vers une conduite. On appelle, sans distinction, distributeur ou réseau de distribution les réseaux d'alimentation et de collecte.

Les documents US 5,354,460, WO 99/48599, US 2007/0246428 et US 2006/124550 décrivent des conceptions dans lesquelles le fluide injecté dans le réseau est orienté via des canaux de distribution de longueurs approximativement égales vers un ou plusieurs sous-distributeurs afin de garantir un temps d'injection approximativement identique pour toutes les lignes de courant sur la phase stationnaire. Ainsi, on assure une quasi-uniformité de distances parcourues pour un composé donné entre son point d'entrée dans la colonne et son injection proprement dite sur la phase stationnaire. Ces systèmes entraînent néanmoins un coût important lié à la fabrication de ces réseaux lorsque les colonnes sont de grand diamètre, de par la multiplication des sous-distributeurs.

Le document WO 02/92188 décrit un système de distribution à plusieurs étages, dans lequel le flux d'entrée ou de sortie est divisé à chaque étage dans deux sillons concentriques (cas des colonnes cylindriques) ou périmétriques (cas des colonnes à section carrée), pouvant éventuellement se subdiviser à l'étage suivant, de sorte à permettre au fluide de parcourir une distance relativement homogène avant d'atteindre le lit de phase stationnaire. Ce type de système peut également entraîner un coût important à cause de la complexité du distributeur à plusieurs étages, et il induit dans certains cas une perte d'efficacité.

Le document WO 2006/055222 décrit des distributeurs entre les cellules d'une colonne, qui sont composés d'une ou plusieurs grilles (ou plaques perforées) supérieures retenant le lit de particules, d'un ou plusieurs plateaux déflecteurs, et d'une ou plusieurs grilles (ou plaques perforées) inférieures permettant d'assurer une répartition du liquide avant percolation dans la cellule inférieure. Dans ces distributeurs, un espace sépare le ou les plateaux déflecteurs de la ou des grilles inférieures.

Le document FR 2933000 décrit un système du même type, dans lequel un baffle peut être intercalé dans le distributeur, afin d'homogénéiser les longueurs des lignes de flux dans chaque cellule de séparation, et réduire la dispersion.

Ces distributeurs ont un volume de liquide important en raison des espaces interstitiels, ce qui augmente la dispersion du fluide et réduit l'efficacité de la séparation.

Les documents WO 00/50144 et WO 2011/159232 décrivent des distributeurs de forme généralement conique. Dans certains cas, le volume à l'intérieur du cône de distribution peut être rempli d'un matériau poreux. Ces distributeurs ont également un volume important, et le coût de construction du plancher (par forge et / ou usinage) et éventuellement du matériau poreux interstitiel est généralement élevé.

Dans le contexte des colonnes de chromatographie industrielles dite à *« haute performance* », c'est-à-dire équipées d'au moins un piston mobile et utilisant des particules de faible dimension (en général de 5 à 50 µm), et présentant une taille globale réduite (typiquement de l'ordre de 1 mètre de diamètre maximum, le fluide est injecté par une conduite centrale (ou plusieurs points d'injection répartis sur le diamètre) dans une chambre de compression de faible épaisseur (en général quelques mm), adjacente à un plancher ou un piston usiné. Le fluide est soumis à une pression créée par un distributeur résistif (généralement une superposition de grilles de faible porosité).

Ce système résistif de faible volume oblige le fluide à se répartir dans la chambre de compression dans un temps très court, ce qui fournit une injection quasi-uniforme sur la phase stationnaire. Afin de garantir une épaisseur constante de la chambre de compression, les extrémités de la colonne (plancher ou piston) sont constituées d'assemblages de pièces usinées avec précision et non soudées entre elles.

Ce dispositif n'est toutefois pas envisageable pour des colonnes de grand diamètre dont les planchers sont maintenus par soudure au fût de la colonne. En effet, le fût de la colonne est fait d'une tôle roulée et soudée auquel les planchers (aux extrémités, ou intermédiaires entre deux cellules) sont alors eux aussi soudés. Par construction, l'horizontalité et la hauteur du plancher ne sont pas maitrisées, et le plancher présente des ondulations de surface de plusieurs millimètres. Ce mode de distribution semble donc incompatible avec les colonnes de grand diamètre.

Il existe un besoin pour des colonnes (notamment de grand diamètre) du type colonnes de chromatographie, équipées de distributeurs de fluides permettant une distribution efficace du fluide sur toute la surface de la colonne, et d'une conception plus simple (et donc entraînant un moindre coût) que les colonnes de l'état de la technique. Il est également souhaitable de faciliter les opérations d'assemblage et de maintenance.

### RESUME DE L'INVENTION

L'invention concerne en premier lieu un distributeur de fluide pour une colonne comportant au moins une cellule contenant un lit de particules, le distributeur de fluide comprenant :
- un plancher comportant au moins un point d'injection assurant une connexion fluidique de part et d'autre de celui-ci ;
- une couche d'un milieu résistif fixée au plancher et formée d'une pluralité de pièces de milieu résistif juxtaposées sur la face du plancher, le milieu résistif étant perméable au fluide ;
- un dispositif d'espacement intercalé entre le plancher et la couche de milieu résistif et maintenant un espacement pour la circulation du fluide entre le plancher et la couche de milieu résistif. < > Selon un mode de réalisation :
- le plancher n'est pas usiné ; et/ou
- le plancher présente un diamètre supérieur à 1 m, de préférence supérieur à 2 m, de plus particulièrement préférée supérieur à 3 m, de manière tout particulièrement préférée supérieur à 4 m.

Selon un mode de réalisation, la couche de milieu résistif comporte de deux à deux cents, et de préférence de cinq à cinquante pièces de milieu résistif.

Selon un mode de réalisation le distributeur de fluide comprend des éléments de fixation maintenant l'ensemble formé par la couche de milieu résistif et le dispositif d'espacement contre le plancher ; les éléments de fixation comprenant de préférence des éléments de jonction recouvrant des pièce adjacentes de milieu résistif, lesdits éléments de jonction comprenant de manière plus particulièrement préférée au moins une plaque d'appui et un joint.

Selon un mode de réalisation l'espacement entre le plancher et la couche de milieu résistif est sensiblement constant sur la totalité de la surface du plancher.

Selon un mode de réalisation, le plancher est sensiblement plan, et de préférence le plancher présente des déviations de 0,5 à 5 mm, de préférence de 1 à 4 mm, par rapport à une géométrie plane.

Selon un mode de réalisation, la traversée du distributeur de fluide par de l'eau s'écoulant 1 m/h à 20°C induit une perte de charge inférieure ou égale à 1 bar, de préférence inférieure ou égale à 200 mbar, plus particulièrement inférieure ou égale à 50 mbar et idéalement inférieure ou égale à 20 mbar.

Selon un mode de réalisation, le dispositif d'espacement génère une première perte de charge le long de lignes de courant entre le plancher et la couche de milieu résistif, une deuxième perte de charge étant générée à la traversée de la couche de milieu résistif, la première perte de charge étant inférieure à la deuxième perte de charge, de préférence au moins deux fois inférieure, plus particulièrement au moins dix fois inférieure et idéalement au moins cent fois inférieure.

Selon un mode de réalisation, le distributeur de fluide comporte un déflecteur installé en au moins un point d'injection.

Selon un mode de réalisation, le dispositif d'espacement consiste en une grille ou en des pièces de grille juxtaposées.

Selon un mode de réalisation, les pièces de milieu résistif sont composées d'une ou plusieurs toiles, plaques perforées, poudres et combinaison de celles-ci.

Selon un mode de réalisation, le plancher comporte une pluralité de points d'injection, de préférence au moins trois, de manière plus particulièrement préférée au moins cinq.

L'invention concerne également une colonne comportant au moins une cellule, de préférence une pluralité de cellules, chaque cellule comportant un lit de particules avec de part et d'autre un dispositif d'alimentation en fluide et un dispositif de collecte de fluide, au moins l'un de ces dispositifs étant un distributeur de fluide tel que décrit ci-dessus.

Selon un mode de réalisation, dans chaque cellule, à la fois le dispositif d'alimentation en fluide et le dispositif de collecte de fluide sont des distributeurs de fluide tels que décrits ci-dessus.

Selon un mode de réalisation, la colonne comprend des conduites de fluides connectées aux points d'injection des distributeurs de fluide et permettant l'amenée de fluide jusqu'à la cellule ou le prélèvement de fluide hors de la cellule.

Selon un mode de réalisation, les planchers des distributeurs de fluide sont fixés, et de préférence sont soudés, à des poutres de soutènement.

Selon un mode de réalisation, la colonne est une colonne de chromatographie, de préférence une colonne de chromatographie en phase liquide.

Selon un mode de réalisation, la colonne est un réacteur chimique.

L'invention concerne également l'utilisation de la colonne ci-dessus dans un procédé de chromatographie, d'adsorption ou d'échange d'ions, de préférence dans un procédé de chromatographie multi-colonnes, tel qu'un procédé de lit mobile simulé ou d'échange d'ions continu ; ou dans un procédé de synthèse chimique sur lit fixe, de préférence dans un procédé catalytique.

Selon un mode de réalisation, ladite utilisation est en mode discontinu, séquentiel, à co-courant ou à contre-courant.

L'invention concerne également un procédé d'installation d'un distributeur de fluide dans une colonne comportant au moins une cellule destinée à contenir un lit de particules, comprenant :
- la mise en place d'un dispositif d'espacement contre la face interne d'un plancher de la cellule, le plancher comportant au moins un point d'injection assurant une connexion fluidique de part et d'autre de celui-ci ;
- la mise en place d'une couche d'un milieu résistif par-dessus le dispositif d'espacement, par juxtaposition de pièces de milieu résistif, le milieu résistif étant perméable au fluide ;
- la fixation de la couche d'un milieu résistif sur le plancher de sorte à serrer le dispositif d'espacement entre la couche de milieu résistif et le plancher, le dispositif d'espacement maintenant un espacement pour la circulation du fluide entre le plancher et la couche de milieu résistif.

Selon un mode de réalisation, le distributeur de fluide est tel que décrit ci-dessus et/ou la colonne est telle que décrite ci-dessus.

Selon un mode de réalisation, la mise en place de la couche d'un milieu résistif comprend l'introduction de pièces de milieu résistif dans la cellule à travers un trou d'homme ; les pièces de milieu résistif pouvant de préférence être pliées pour être introduites à travers le trou d'homme.

Selon un mode de réalisation, la mise en place du dispositif d'espacement et la mise en place de la couche de milieu résistif sont effectuées :
- soit de manière séquentielle, une ou plusieurs pièces de dispositif d'espacement étant d'abord positionnées contre la face interne du plancher puis les pièces de milieu résistif étant fixées par-dessus le dispositif d'espacement ;
- soit de manière simultanée, une ou plusieurs pièces de dispositif d'espacement étant préassemblées avec des pièces de milieu résistif avant le positionnement et la fixation du dispositif d'espacement contre la face interne du plancher conjointement avec la couche de milieu résistif.

La présente invention permet de surmonter les inconvénients de l'état de la technique. Elle fournit plus particulièrement des distributeurs de fluide pour colonnes (notamment de grand diamètre) du type colonnes de chromatographie, qui offrent une distribution efficace du fluide sur toute la surface de la colonne, et qui sont d'une conception plus simple et de coût moindre que les colonnes de l'état de la technique. Les opérations d'assemblage et de maintenance de ces distributeurs de fluide sont facilitées.

Cela est accompli grâce à la fixation d'une couche d'un milieu résistif sur une face d'un plancher faisant face à un lit de particules de la colonne, et à l'intercalation d'un dispositif d'espacement entre la couche de milieu résistif et le plancher afin de maintenir un espacement pour la circulation du fluide. La couche de milieu résistif est formée de plusieurs pièces juxtaposées, ce qui facilite son assemblage.

Ces distributeurs présentent un faible volume et un faible coût, et ils permettent de fabriquer des colonnes de grand diamètre ayant des performances améliorées.

### BREVE DESCRIPTION DES FIGURES

La **figure 1** représente de manière schématique une colonne pourvue de dispositifs de distribution de fluide selon l'invention.
La **figure 2** représente de manière schématique une cellule de colonne comportant deux dispositifs de distribution de fluide selon l'invention.
Les **figures 3** et **4** représentent de manière schématique des modes de réalisation de couches de milieu résistif utilisées dans l'invention.
La **figure 5** représente de manière schématique des exemples de dispositions de points d'injection possibles dans le cadre de l'invention.
Les **figures 6, 7a** et **7b** représentent de manière schématique des modes de réalisation comportant un déflecteur.
Les **figures 8a** à **8j** représentent de manière schématique des modes de fixation possibles de pièces de milieu résistif entre elles et au plancher, selon l'invention.

### DESCRIPTION DE MODES DE REALISATION DE L'INVENTION

L'invention est maintenant décrite plus en détail et de façon non limitative dans la description qui suit.

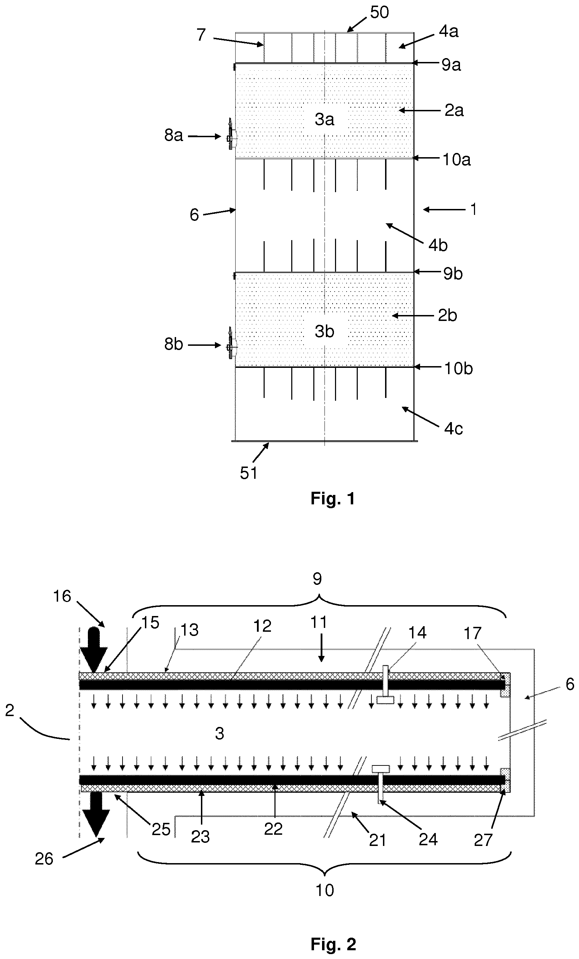

En faisant référence à la **figure 1**, l'invention concerne une colonne 1, qui dans le mode de réalisation illustré est une colonne multi-étagée. Alternativement la colonne pourrait être mono-étagée. La colonne 1 comprend un axe principal, qui en général est un axe vertical. Il s'agit de préférence d'une colonne de chromatographie, ou bien d'une colonne de réacteur chimique.

La colonne 1 comporte une pluralité de cellules 2a, 2b, au nombre de de deux sur la figure, espacées le long de l'axe principal de la colonne 1. Dans le cas d'une colonne mono-étagée, il y aurait une seule cellule. Chaque cellule 2a, 2b comporte un lit de particules respectif 3a, 3b. Le lit de particules 3a, 3b constitue une phase stationnaire, qui est le lieu de la réaction chimique et/ou de la séparation chromatographique.

Les particules du lit de particules ont de préférence un diamètre volumique moyen Dv50 supérieur ou égal à 30 µm, ou supérieur ou égal à 50 µm, ou supérieur ou égal à 100 µm, ou supérieur ou égal à 200 µm, ou supérieur ou égal à 300 µm.

Selon une variante non représentée, la colonne 1 comporte plus de deux cellules, par exemple trois cellules ou plus de trois cellules.

La colonne 1 selon l'invention est de préférence cylindrique le long de l'axe principal. Selon un mode de réalisation, la section de la colonne 1 est circulaire. Selon d'autres modes de réalisation, la colonne 1 (ou au moins une de ses cellules 2a, 2b) peut avoir une section carrée, rectangulaire, oblongue, ou même peut avoir une forme conique par exemple.

Le diamètre de la colonne peut être de préférence supérieur ou égal à 1 m ; ou supérieur ou égal à 2 m ; ou supérieur ou égal à 3 m ; ou supérieur ou égal à 4 m ; ou supérieur ou égal à 4 m. Par « *diamètre de la colonne* », on entend ici le diamètre externe de la colonne. Dans le cas d'une colonne qui n'est pas cylindrique à section circulaire, le diamètre s'entend de la dimension maximale de la colonne dans une section perpendiculaire à son axe principal. Par exemple, pour une section rectangulaire ou carrée, le diamètre désigne la diagonale.

Des espaces inter-cellules 4a, 4b, 4c sont disposés entre les cellules 2a, 2b adjacentes et éventuellement aux extrémités supérieure et inférieure de la colonne 1.

Chaque cellule 2a, 2b est délimitée en haut et en bas par deux dispositifs de distribution de fluide 9a, 10a, 9b, 10b respectifs, à savoir un dispositif d'alimentation en fluide 9a, 9b et un dispositif de collecte de fluide 10a, 10b. Le terme « *distribution de fluide* » est utilisé de manière générique dans la demande pour désigner une alimentation en fluide (dispersion du fluide à l'entrée dans une cellule) ou bien une collecte de fluide (soutirage du fluide issu d'un volume de la cellule, par exemple de la totalité de la cellule).

En général, le fluide traverse une cellule 2a, 2b du haut vers le bas, le dispositif d'alimentation en fluide 9a, 9b étant disposé en haut et le dispositif de collecte de fluide 10a, 10b étant disposé en bas. Toutefois, une orientation différente (par exemple du bas vers le haut) est également possible.

Ces dispositifs de distribution de fluide sont associés à des planchers respectifs, qui retiennent le lit de particules 3a, 3b dans la cellule 2a, 2b. Dans la présente demande, on utilise le terme de « *plancher* » indifféremment pour la paroi inférieure ou pour la paroi supérieure (plafond) de la cellule.

Selon l'invention, au moins un dispositif de distribution de fluide de la colonne est tel que décrit ci-dessous. Par exemple, au moins un dispositif de distribution de fluide par cellule est tel que décrit ci-dessous. D'autres dispositifs de distribution de fluide (non conformes à l'invention, appelés ici « *conventionnels* ») peuvent être utilisés en combinaison avec des dispositifs de distribution de fluide selon l'invention (tels que décrits ci-dessous).

Selon un mode de réalisation, chaque cellule comporte un dispositif de distribution de fluide selon l'invention et un autre dispositif de distribution de fluide conventionnel. Dans ce cas, le dispositif de distribution de fluide selon l'invention peut notamment être le dispositif d'alimentation en fluide.

Selon un autre mode de réalisation, tous les dispositifs de distribution de fluide d'une cellule, ou tous les dispositifs de distribution de fluide de la colonne, sont selon l'invention (et donc tels que décrits ci-dessous).

Dans une variante de l'invention au moins un plancher d'une cellule n'est pas usiné. Dans une variante de l'invention aucun plancher de cellule n'est usiné.

La colonne 1 comporte un corps principal 6 ou virole ou fût qui s'étend dans la direction de l'axe principal. De préférence, elle comporte également des poutres de soutènement 7 qui maintiennent au moins un plancher de cellule, de préférence tous les planchers de cellules, solidaires du corps principal 6 de la colonne 1. Les poutres de soutènement 7 peuvent être fixées au corps principal 6 par soudure ou tout autre moyen approprié.

Le corps principal 6 est fermé à chaque extrémité par un plancher d'extrémité 50, 51 respectif.

Selon une variante préférée de tous les modes de réalisation de l'invention, chaque plancher est solidaire du corps principal 6. Ainsi, de préférence, les cellules 2a, 2b de la colonne 1 sont dépourvues de tout piston.

Des trous d'homme 8a, 8b peuvent être prévus en un ou plusieurs emplacements de la colonne 1, notamment pour fournir un accès aux différentes cellules 2a, 2b.

Des conduites de transport de fluide, non représentées sur la figure, permettent d'alimenter chaque cellule 2a, 2b en fluide et de collecter du fluide issu de chaque cellule 2a, 2b. De telles conduites de transport de fluide sont notamment généralement prévues dans les espaces inter-cellules 4a, 4b, 4c.

Il peut y avoir un fluide unique circulant dans chaque cellule 2a, 2b, ou bien, dans une variante, plusieurs fluides introduits et/ou prélevés par des conduites différentes (simultanément ou de manière séparée dans le temps).

De manière préférée, par « *fluide* » on entend un liquide, qui peut par exemple être une solution aqueuse ou une phase organique ou un mélange aqueux / organique.

Alternativement, le fluide peut être un gaz ou un fluide supercritique. Des mélanges des fluides ci-dessus sont également envisageables.

Le fluide peut être un mélange de réactifs, un mélange de produits réactionnels, un mélange de composés à séparer, de l'eau, un éluant, un désorbant, un fluide de lavage, etc.

Ainsi, tout flux de fluide entrant ou sortant de chaque cellule 2a, 2b peut être canalisé dans une ou plusieurs conduites, ou éventuellement être totalement ou partiellement injecté ou extrait de la colonne.

Dans une variante, un flux de fluide (tel que par exemple un éluant, un désorbant ou un mélange à séparer) est combiné à tout ou partie d'un flux de fluide sortant d'une cellule et introduit dans une autre cellule adjacente ou non.

Les moyens d'extraction ou d'ajout de fluide sont ceux typiquement utilisés par l'homme du métier en fonction de l'application et de la taille de l'installation, comme par exemple des manifolds de vannes à deux ou plusieurs voies, rotatives ou non, manuelles ou automatisées, dont la conception et les matériaux sont adaptés à l'application.

Dans une autre variante, les cellules d'une colonne communiquent entre elles via des orifices ménagés dans un ou plusieurs planchers, une boîte de mélange étant éventuellement présente au niveau d'un plancher ou entre les planchers afin d'extraire ou d'ajouter des flux entre deux cellules.

En faisant référence à la **figure 2****,** une cellule 2 est délimitée par deux dispositifs de distribution de fluide 9, 10 respectifs selon l'invention, à savoir un dispositif d'alimentation en fluide 9 et un dispositif de collecte de fluide 10 ; et elle comprend un lit de particules 3.

Chacun de ces dispositifs de distribution de fluide 9, 10 comporte un plancher 11, 21 respectif, à savoir un plancher supérieur 11 et un plancher inférieur 21.

De préférence chaque plancher 11, 21 est sensiblement plan. Toutefois, de préférence, le plancher 11, 21 présente des déviations ou écarts compris entre 0,5 et 5 mm environ, de préférence entre 1 et 4 mm environ, par rapport à une géométrie plane. La géométrie plane de référence est le plan théorique tangent à la surface maximale du plancher 11, 21. Les écarts ou déviations correspondent à la distance maximale entre le plancher 11, 21 et la géométrie plane de référence.

Ces écarts sont de préférence localisés, ils peuvent être observés notamment aux points de fixation (par exemple de soudure) du plancher 11, 21 aux poutres de soutènement. En ces points, le plancher 11, 21 a tendance à former des bosses ou des creux par rapport à la géométrie plane de référence.

Au moins une conduite d'alimentation en fluide 16 (de préférence munie d'une ou plusieurs vannes) est prévue pour alimenter la cellule 2 en fluide. Elle débouche sur un orifice ménagé dans le plancher supérieur 11, en un point d'injection 15. Un point d'injection correspond à un emplacement où le fluide traverse le plancher d'une cellule ; il s'agit de l'interface entre une conduite et une cellule. Le terme « *point d'injection* » est employé dans la présente demande indifféremment pour une arrivée de fluide ou pour un prélèvement de fluide.

Le dispositif d'alimentation en fluide 9 assure la répartition du fluide issu de la conduite d'alimentation en fluide 16 sur l'ensemble de la surface du lit de particules 3, surface qui est perpendiculaire à la direction générale de l'écoulement (correspondant en principe à l'axe principal de la colonne).

Au moins une conduite de collecte de fluide 26 (de préférence munie d'une ou plusieurs vannes) est prévue pour soutirer du fluide en sortie de la cellule 2. Elle a pour origine un orifice ménagé dans le plancher inférieur 21, en un point d'injection 25.

Le dispositif de collecte de fluide 10 assure la collecte du fluide issu de l'ensemble de la surface du lit de particules 3 qui est perpendiculaire à la direction générale de l'écoulement, et son soutirage dans la conduite de collecte de fluide 26.

Le dispositif d'alimentation en fluide 9 comporte une couche d'un milieu résistif 12 qui est fixée au plancher supérieur 11 sur la totalité (ou sensiblement la totalité) de la surface de celui-ci, sur sa face interne (c'est-à-dire faisant face au lit de particules 3). Entre la couche de milieu résistif 12 et le plancher supérieur 11 est intercalé un dispositif d'espacement 13. Celui-ci maintient un espacement pour la circulation du fluide entre le plancher supérieur 11 et la couche de milieu résistif 12.

De préférence, le dispositif d'espacement 13 est en contact à la fois avec le plancher supérieur 11 et la couche de milieu résistif 12.

De préférence, la couche de milieu résistif 12 est directement en contact avec le lit de particules 3.

On peut qualifier de « *chambre de compression* » l'espace compris entre le point d'injection 15 et la couche de milieu résistif 12. Le fluide se répartit dans la chambre de compression avant de traverser la couche de milieu résistif. La chambre de compression est de préférence unique et couvre substantiellement l'intégralité de la surface du distributeur.

Dans une variante de l'invention, le nombre de chambres de compression est égal, de préférence inférieur au nombre de pièces de milieu résistif.

Le milieu résistif est un matériau poreux.

Le milieu résistif est imperméable à la phase stationnaire (particules du lit de particules 3) et est perméable au fluide. La perte de charge engendrée par la couche de milieu résistif est typiquement inférieure ou égale à 1 bar (ou à 500 mbar ou à 200 mbar ou à 100 mbar ou à 50 mbar ou à 20 mbar) pour une vitesse d'eau à 20°C de 1 m/h.

Le milieu résistif peut être composé, de manière non exhaustive, de toiles et/ou poudres et/ou plaques perforées, en métal et/ou en plastique et/ou céramiques, et/ou d'une combinaison de ces éléments.

Dans une variante préférée, le milieu résistif est constitué d'une toile, ou bien de deux toiles superposées, ou bien de trois toiles superposées, ou bien de quatre toiles superposées, ou bien de cinq toiles superposées, ou bien de plus de cinq toiles superposées. Les toiles peuvent être calandrées entre elles.

Dans une variante préférée, le seuil de coupure nominal du milieu résistif, c'est-à-dire la taille minimale des particules ne pouvant pas traverser le milieu résistif, est inférieur à 1 mm, de préférence inférieur à 500 µm, de préférence inférieur à 250 µm, de préférence inférieur à 100 µm, de préférence inférieur à 50 µm.

Le dispositif d'espacement 13 assure de préférence une hauteur quasiment constante à la chambre de compression. Il est situé dans la chambre de compression, c'est-à-dire entre la couche de milieu résistif 12 et le plancher 11.

De préférence, le dispositif d'espacement 13 ne fait pas partie du plancher 11. Il s'agit d'une pièce distincte et non d'un usinage sur une face du plancher 11.

Le dispositif d'espacement 13 inséré dans la chambre de compression présente de préférence une hauteur supérieure ou égale à 1 mm et inférieure ou égale à 100 mm, notamment inférieure ou égale à 50 mm, ou inférieure ou égale à 10 mm, ou inférieure ou égale à 5 mm.

Le dispositif d'espacement 13 supporte la couche de milieu résistif 12 et permet de contrôler la hauteur de la chambre de compression afin de maitriser la vitesse de passage du fluide, tout en minimisant le volume de la chambre de compression.

Le dispositif d'espacement 13 peut être constitué d'une pièce unique ou de plusieurs pièces, qui peuvent par exemple être brasées entre elles, ce qui facilite le montage et la maintenance.

Les pièces de dispositif d'espacement peuvent être superposées selon l'axe principal de la colonne et/ou être réparties selon un pavage de la surface perpendiculaire à l'axe principal de la colonne.

Par exemple, le dispositif d'espacement peut être composé de plusieurs pièces, telles que plusieurs grilles (deux ou plus de deux) empilées en couches.

Dans une variante préférée, un empilement de dispositif d'espacement 13 et de milieu résistif est préfabriqué. Le dispositif d'espacement 13 peut par exemple être brasé au milieu résistif, ou de préférence être compressé avec le milieu résistif. Cette solidarité permet un montage et une maintenance simplifiés.

Le dispositif d'espacement 13 est composé de rondelles, de grille(s) ou grillage(s), de supports plats ou de mousses. Selon un mode de réalisation avantageux, il s'agit d'un grillage disposé à plat entre le plancher 11 et la couche de milieu résistif 12, ayant une épaisseur de 1 à 5 mm, notamment de 2 à 4 mm, et ayant des mailles dont le diamètre (au sens exposé ci-dessus) est d'au moins 1 cm, de préférence d'au moins 2 cm.

Le dispositif d'espacement 13 peut être constitué de façon non limitative de plastique, de céramique, de métal et/ou d'une combinaison de ces matériaux.

Dans une variante préférée, le dispositif d'espacement 13 génère une perte de charge le long des lignes de courants dans la chambre de compression inférieure à la perte de charge dans le milieu résistif, de préférence au moins deux fois inférieure, de préférence au moins dix fois inférieure, de préférence au moins cent fois inférieure.

Des éléments de fixation 14, 17 assurent la fixation de la couche de milieu résistif 12 au plancher supérieur 11, et ainsi le serrage du dispositif d'espacement 13 entre la couche de milieu résistif 12 et le plancher supérieur 11. Grâce aux éléments de fixation 14, 17, on évite toute déformation substantielle de la couche de milieu résistif 12 lorsque le fluide circule dans la colonne.

Les éléments de fixation 14, 17 peuvent être par exemple des éléments de soudage, tissage, calandrage, frittage, vissage, rivetage ou une combinaison de ceux-ci.

Les éléments de fixation 14, 17 peuvent être constitué de façon non limitative de plastique, de céramique, de métal et/ou d'une combinaison de ces matériaux. On peut par exemple utiliser de manière non limitative des goujons vissés, des écrous, des plats de serrage, des grillages, des caillebotis, des rivets...

Selon une variante de l'invention, les éléments de fixation 14, 17 sont intégrés avec le dispositif d'espacement 13, avec lequel ils forment une seule et même pièce.

Les éléments de fixation 14, 17 peuvent être séparés ou être intégrés à une même structure (totalement ou partiellement), par exemple un ensemble de tiges ou plaques appuyant sur la couche de milieu résistif 12 grâce à des moyens de serrage tels que des boulons.

Un ou plusieurs éléments étanches à la phase stationnaire peuvent être ajoutés aux éléments de fixation, notamment en périphérie de la couche de milieu résistif. Ceux-ci peuvent être partiellement perméables au fluide. Les éléments étanches peuvent être composés par exemple d'élastomère (notamment EPDM, silicone, Viton^{®}), de matériau plastique (par exemple polyéthylène ou polypropylène, polymères fluorés), de métal ou de céramique. Ces éléments étanches ont pour but de garantir l'étanchéité de la couche de milieu résistif 12 vis-à-vis de la phase stationnaire, et ainsi éviter que la phase stationnaire puisse sortir de la colonne.

Les éléments de fixation peuvent comprendre des éléments de fixation périphériques 17 assurant la fixation de l'extrémité de la couche de milieu résistif 12 au corps principal 6 de la colonne, ou au plancher 11 au voisinage du corps principal 6 de la colonne. Ils peuvent également comprendre des éléments de fixations centraux 14 assurant la fixation de la couche de milieu résistif 12 directement au plancher supérieur 11 en plusieurs points répartis sur la surface de ce plancher supérieur 11.

Le dispositif de collecte de fluide 10 présente une configuration semblable à celle du dispositif d'alimentation en fluide 9 et l'ensemble de la description ci-dessus s'applique donc *mutatis mutandis.* En particulier, une couche de milieu résistif 22 est fixée au plancher inférieur 21 sur la totalité (ou sensiblement la totalité) de la surface de celui-ci, sur sa face interne (c'est-à-dire faisant face au lit de particules 3). Entre la couche de milieu résistif 22 et le plancher inférieur 21 est intercalé un dispositif d'espacement 23, qui maintient un espacement pour la circulation du fluide entre le plancher inférieur 21 et la couche de milieu résistif 22.

De préférence, le dispositif d'espacement 23 est en contact à la fois avec le plancher inférieur 21 et la couche de milieu résistif 22.

Des éléments de fixation 24, 27 assurent la fixation de la couche de milieu résistif 22 au plancher inférieur 21, et ainsi le serrage du dispositif d'espacement 23 entre la couche de milieu résistif 22 et le plancher inférieur 21. Ils peuvent comprendre des éléments de fixation périphériques 27 et des éléments de fixation centraux 24 tels que décrits ci-dessus.

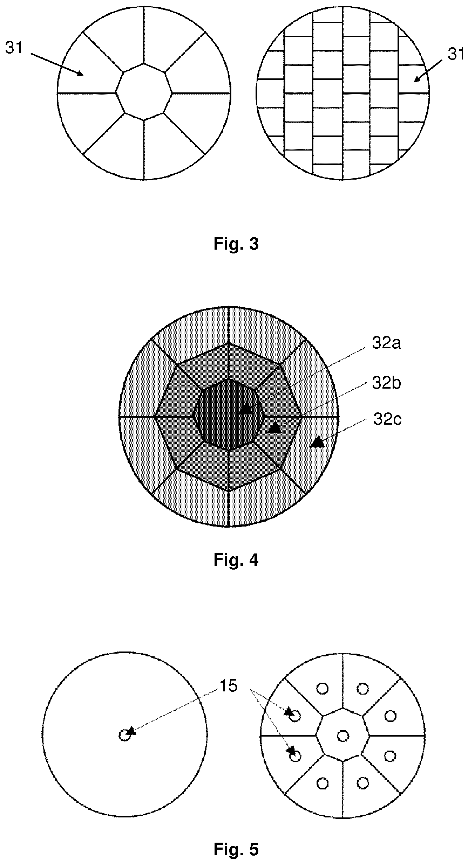

En faisant référence à la **figure 3****,** chaque couche de milieu résistif comporte une pluralité de pièces de milieu résistif 31, qui sont juxtaposées de sorte à assurer un pavage de la surface du plancher. Le terme « juxtaposer » s'entend dans la présente demande comme désignant une disposition côte à côte dans des directions perpendiculaires à la direction générale d'écoulement (axe de la colonne). Par exemple, pour un plancher plan ou quasi-plan, la juxtaposition des pièces de milieu résistif est effectuée parallèlement (ou substantiellement parallèlement) au plan du plancher.

Entre les pièces de milieu résistif 31 juxtaposées, on prévoit de préférence des joints d'étanchéité, comme cela sera décrit plus en détail ci-dessous.

La couche de milieu résistif est de préférence d'épaisseur substantiellement constante (perpendiculairement au plancher, parallèlement à la direction générale d'écoulement).

Deux exemples de pavage possibles par juxtaposition de pièces sont représentés dans la partie de gauche et la partie de droite de la figure. Ces pièces de milieu résistif 31 présentent avantageusement une forme géométrique ayant au moins un isomorphisme.

Par exemple, les pièces de milieu résistif 31 peuvent avoir une forme de carrés, de rectangles, de triangules, de disques ou sections de disques, ou toute forme présentant un arc de cercle sur un des ses côtés.

De préférence, les pièces de milieu résistif 31 ont un périmètre qui comporte au moins un segment rectiligne (ou substantiellement rectiligne), par exemple au moins deux segments rectilignes (ou substantiellement rectilignes) ce qui facilite la construction de la couche de milieu résistif et sa fixation au plancher.

La couche de milieu résistif peut ainsi comporter 2 pièces de milieu résistif, ou 3 pièces de milieu résistif, ou 4 pièces de milieu résistif, ou 5 pièces de milieu résistif, ou 6 pièces de milieu résistif, ou 7 pièces de milieu résistif, ou 8 pièces de milieu résistif, ou 9 pièces de milieu résistif, ou encore de 10 à 20 pièces de milieu résistif, ou de 20 à 30 pièces de milieu résistif, ou plus de 30 pièces de milieu résistif.

Ce mode de réalisation permet de faciliter le montage du dispositif de distribution de fluide par un opérateur travaillant à l'intérieur de la colonne. De même, la maintenance du dispositif de distribution de fluide est facilitée pour les mêmes raisons.

Le dispositif d'espacement peut lui-même être composé de plusieurs pièces, connectées ou non.

Selon une variante, le nombre de pièces de milieu résistif et du dispositif d'espacement est le même.

Selon une autre variante, ce nombre est différent. Par exemple, on peut prévoir une unique pièce de dispositif d'espacement pour couvrir toute la surface du plancher, en association avec plusieurs pièces de milieu résistif.

Selon une variante, au moins certaines pièces de milieu résistif (de préférence la totalité) sont souples et ont une dimension supérieure aux trous d'homme pratiqués dans la virole au niveau de la cellule. La souplesse du milieu résistif permet ainsi de minimiser le nombre de pièces de milieu résistif pour une surface de colonne donnée.

Selon une variante, la couche de milieu résistif comporte une perméabilité au fluide uniforme sur l'ensemble de la surface du dispositif de distribution de fluide.

Selon une autre variante, la couche de milieu résistif présente une perméabilité au fluide variable en différents points du dispositif de distribution de fluide.

Par exemple, un milieu plus résistif pourra être placé vers le centre du dispositif, ou en face de chaque point d'injection. Ainsi, en référence à la **figure 4**, la couche de milieu résistif peut être composée d'une partie centrale 32a, d'une partie intermédiaire 32b disposée de façon concentrique autour de la partie centrale 32a, et d'une partie périphérique 32c disposée de façon concentrique autour de la partie intermédiaire 32b. Chaque partie peut être composée d'une seule pièce ou de plusieurs pièces de milieu résistif. De préférence, la partie centrale 32a présente une perméabilité inférieure à la partie intermédiaire 32b, qui elle-même présente une perméabilité inférieure à la partie périphérique 32c.

Utiliser des résistivités différentes selon la position permet d'assurer une vitesse de perméation quasi-identique en tout point du système.

De préférence on recouvre les jointures entre les différentes pièces de milieu résistif avec un matériau imperméable à la phase stationnaire (et de préférence également imperméable au fluide). Selon un mode de réalisation, cette fonction est assurée par tout ou partie des éléments de fixation, qui comprennent alors des éléments de jonction assurant à la fois la fixation des pièces de milieu résistif au plancher et le recouvrement des périphéries adjacentes de pièces de milieu résistif.

Les éléments de jonction peuvent comprendre une ou plusieurs plaques d'appui et un joint d'étanchéité, ainsi que des moyens de serrage (tels que des boulons par exemple).

En faisant référence à la **figure 5****,** selon une variante (partie de gauche de la figure), on associe à la cellule une conduite d'alimentation en fluide unique. Le point d'injection unique 15 correspondant est de préférence disposé au centre du dispositif d'alimentation en fluide.

Selon une autre variante (partie de droite de la figure), on associe à la cellule une pluralité de conduites d'alimentation en fluide, ou encore une conduite d'alimentation unique se divisant en plusieurs branches pour alimenter la cellule. Les points d'injection multiples 15 correspondants sont de préférence répartis de manière sensiblement uniforme sur la surface du dispositif d'alimentation en fluide.

A chaque point d'injection 15 peut être associé une pièce unique de milieu résistif. Alternativement, le nombre ou la position des pièces de milieu résistif peuvent être décorrélés des points d'injection.

Ainsi le fluide peut être injecté en plusieurs points dans le plancher de la colonne. Dans une variante préférée, le nombre de points d'injection dans au moins une cellule est de deux ou de trois ou de quatre ou de cinq ou de six ou de sept, voire de plus de sept. L'intérêt d'une multiplication des points d'injection est la diminution de la distance de parcours du fluide avant la perméation au travers du distributeur, et une diminution de la perte de charge dans le distributeur.

Les considérations ci-dessus relatives au nombre et à la position des points d'injection s'appliquent de la même manière s'agissant d'un dispositif de collecte de fluide.

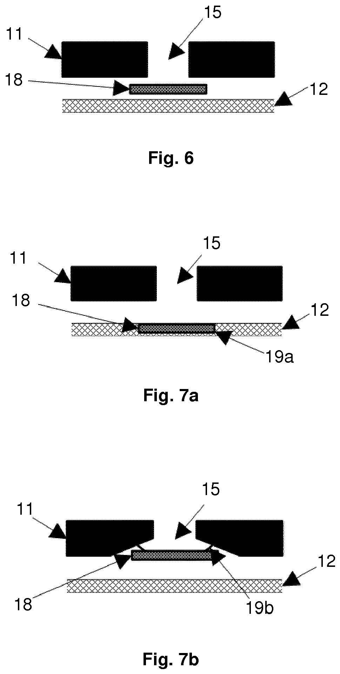

En faisant référence à la **figure 6**, un déflecteur 18 (ou brise-jet) peut être installé à au moins un des points d'injection 15 du fluide (par exemple à tous les points d'injection du fluide). Le déflecteur 18 permet d'améliorer le changement de direction du fluide. L'écoulement du fluide passe ainsi d'une direction axiale à une direction radiale (ou parallèle à la couche de milieu résistif 12) dans le cas de l'injection, et d'une direction radiale à une direction axiale dans le cas de la collecte / du soutirage. On évite ainsi des écoulements préférentiels au niveau des points d'injection 15.

Le déflecteur 18 peut être maintenu par les éléments de fixation décrits ci-dessus.

Il peut également être lié, par exemple brasé, sur la couche de milieu résistif 12 (voir la **figure 7a**).

Il peut également être attaché, par exemple fixé, au plancher 11, par des moyens d'attachement 19a. Le plancher peut également être localement conique afin de permettre cet attachement (voir la **figure 7b**).

Le brise-jet peut être partiellement perméable au fluide. Sa surface peut varier entre 0,5 fois et 5 fois (ou 10 fois) la section du point d'injection 15.

Dans une autre variante (non illustrée), un baffle est installé à l'intérieur de la chambre de compression à l'entrée ou à la sortie de la cellule. Le baffle est de dimension inférieure à celle du plancher, de telle sorte que le fluide parcourt un trajet de longueur approximativement identique, quelle que soit sa position par rapport au centre de la colonne. De préférence, ce baffle est maintenu en sandwich entre des pièces du dispositif d'espacement (lesdites pièces pouvant par exemple former des couches du dispositif d'espacement, par exemple des grilles superposées).

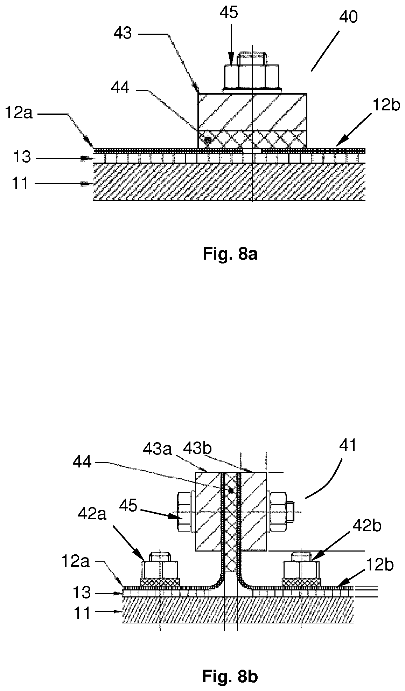

En faisant référence à la **figure 8a**, un exemple d'élément de fixation, dit élément de jonction 40, est illustré. Cet élément de jonction 40 assure l'assemblage, la fixation et le serrage de deux pièces de milieu résistif 12a et 12b, ainsi que du dispositif d'espacement 13 contre le plancher 11. Un orifice de vissage (non illustré) est ménagé dans le plancher 11, permettant la fixation d'un boulon 45. La vis du boulon traverse l'assemblage et le dispositif d'espacement 13 et vient se loger dans le plancher 11.

Un joint 44 ainsi qu'une plaque d'appui 43 faisant office de dispositif de maintien peuvent être prévus entre le boulon 45 et la couche de milieu résistif 12. La forme du joint 44 et de la plaque d'appui 43 permet de recouvrir la zone de jonction des pièces de milieu résistif 12a, 12b.

Un tel élément de de jonction 40 est notamment adapté pour la fixation des pièces de milieu résistif sur leur périmètre. La plaque d'appui 43 est avantageusement rigide et permet d'appuyer le joint 44 sur tout le périmètre des pièces de milieu résistif 12a, 12b. Le joint 44 empêche la phase stationnaire de sortir de la cellule considérée et empêche des passages préférentiels de liquide. Une rondelle est associée au boulot 45, notamment à des fins d'étanchéité (au-dessus de la plaque d'appui 43).

D'autres boulons (non représentés) peuvent être associés à la même plaque d'appui 43.

En faisant référence à la **figure 8b**, un autre exemple d'élément de fixation, dit élément de jonction 41, est illustré. Celui-ci est notamment approprié pour la fixation de deux pièces de milieu résistif entre elles, à la jonction de celles-ci. L'élément de jonction 41 comporte un boulon 45 qui enserre les extrémités de deux pièces de milieu résistif 12a, 12b avec deux plats de fixation 43a, 43b respectifs de part et d'autre des pièces de milieu résistif 12a, 12b. Au moins une rondelle, voire deux de part et d'autre des plats de fixation 43a, 43b, sont prévues. Un élément d'étanchéité 44 est disposé entre les deux pièces de milieu résistif 12a, 12b afin de garantir l'étanchéité à la phase stationnaire. D'autres boulons (non représentés) peuvent être associés au même ensemble de plats de fixation 43a, 43b.

D'autres éléments de fixation 42a, 42b permettent la fixation des pièces de milieu résistif 12a, 12b respectives au plancher 11. Chacun de ces éléments de fixation 42a, 42b comporte un boulon fixé dans le plancher 11 et traversant la pièce de milieu résistif 12a, 12b et le dispositif d'espacement 13. Un élément d'étanchéité (rondelle) est positionné à l'interface entre l'élément de fixation 42a, 42b et la pièce de milieu résistif 12a, 12b.

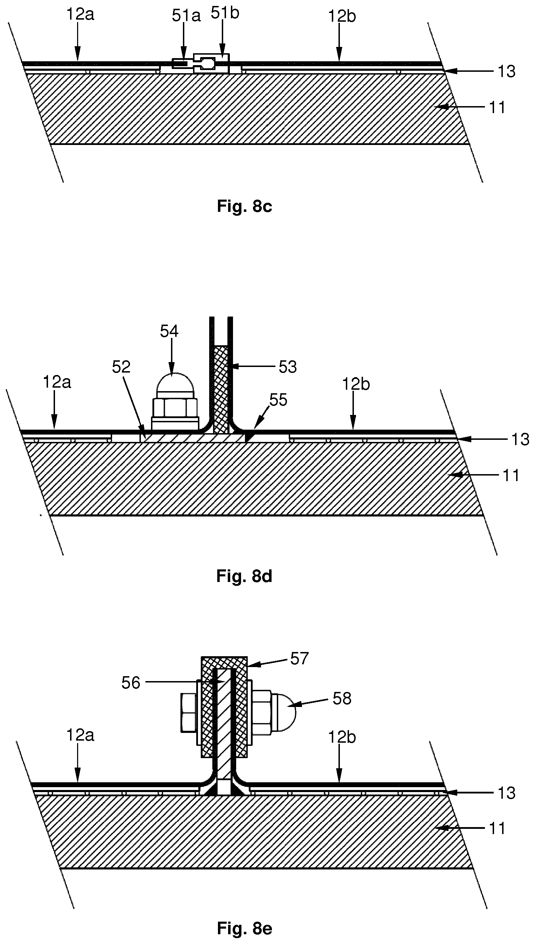

Sur la **figure 8c** est représenté un autre mode de réalisation de l'assemblage de pièces de milieu résistif 12a, 12b entre elles. Cet assemblage implique des éléments de clipsage respectifs 51a, 51b qui sont attachés (par exemple par soudure) aux bords en regard des pièces de milieu résistifs 12a, 12b.

Sur la **figure 8d** est représenté encore un autre mode de réalisation de l'assemblage de pièces de milieu résistif 12a, 12b entre elles et de fixation de celles-ci au plancher 11. L'assemblage implique une plaque 52 disposée contre le plancher 11. Cette plaque 52 peut faire partie du dispositif d'espacement 13 ou bien être disposée dans un espace libre du dispositif d'espacement 13.

L'une des pièces de milieu résistif 12a est fixée à la plaque 52 et au plancher 11 par au moins un boulon 54, de manière analogue à ce qui a été décrit ci-dessus en lien avec la **figure 8a**. L'autre pièce de milieu résistif 12b est également fixée à la plaque 52, par exemple par une soudure 55 (une fixation par d'autres boulons serait également possible). On peut prévoir un joint 53 fixé entre les extrémités des deux pièces de milieu résistif 12a, 12b qui s'étendent au-delà des points de fixation. Ce joint 53 peut être par exemple en forme de plaque orientée perpendiculairement à la plaque 52.

Sur la **figure 8e** est représenté encore un autre mode de réalisation de l'assemblage de pièces de milieu résistif 12a, 12b entre elles et de fixation de celles-ci au plancher 11. L'assemblage est une variante de celui décrit ci-dessus en lien avec la **figure 8b****.** Dans cette variante, les bords des pièces de milieu résistif 12a, 12b adjacentes sont enserrés par un joint 57 ayant un profil en U. Un plat de fixation 56 est disposé entre les bords des pièces de milieu résistif 12a, 12b. Un boulon 58 (ou plusieurs) assure le maintien et le serrage de l'ensemble.

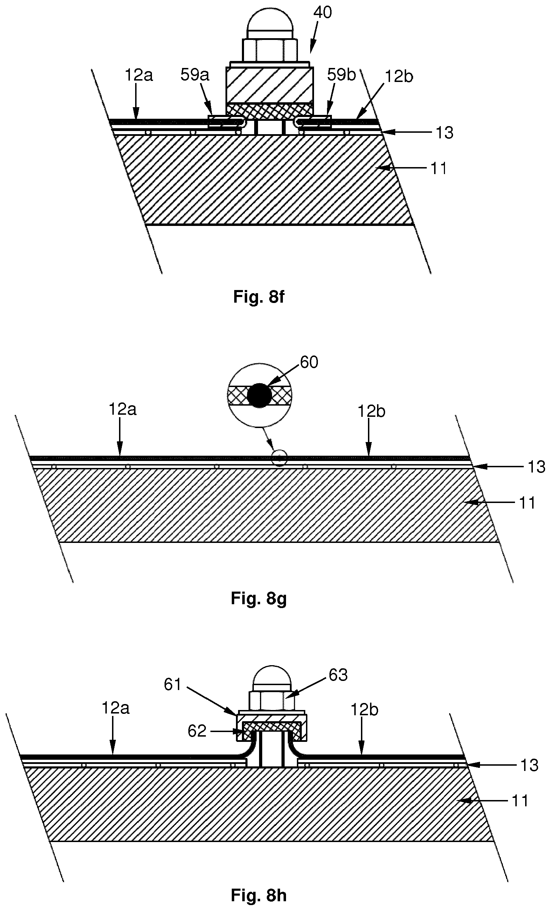

Sur la **figure 8f** est représenté encore un autre mode de réalisation de l'assemblage de pièces de milieu résistif 12a, 12b entre elles et de fixation de celles-ci au plancher 11. L'assemblage est une variante de celui décrit ci-dessus en lien avec la **figure 8a**. Il implique en particulier le même élément de jonction 40 que dans cette figure, avec boulon, rondelle, joint et plaque d'appui (étant entendu qu'on peut prévoir plusieurs tels éléments de jonction). Dans cette variante, les bords en regard des pièces de milieu résistif 12a, 12b adjacentes sont pourvues de plaques d'extrémité 59a, 59b. Ces plaques d'extrémité 59a, 59b peuvent par exemple être soudées aux corps respectifs des pièces de milieu résistif 12a, 12b. Elles peuvent s'étendre sur une seule des faces des pièces de milieu résistif 12a, 12b, ou sur les deux faces, ou encore elles peuvent avoir une forme en U et ainsi enserrer les bords de ces pièces. Dans l'exemple illustré, le joint de l'élément de jonction 40 appuie directement sur les plaques d'extrémité 59a, 59b.

Sur la **figure 8g** est représenté un autre mode de réalisation de l'assemblage de pièces de milieu résistif 12a, 12b entre elles. Dans ce mode de réalisation, les pièces de milieu résistif 12a, 12b adjacentes sont simplement attachées par une ou plusieurs soudures 60 le long de leurs bords en regard.

Sur la **figure 8h** est représenté encore un autre mode de réalisation de l'assemblage de pièces de milieu résistif 12a, 12b entre elles et de fixation de celles-ci au plancher 11. Le principe de l'assemblage est très proche de celui de la **figure 8a**. Ici également, l'assemblage et la fixation sont assurés par un boulon 63 (ou plusieurs), qui appuie sur une plaque d'appui 61, qui elle-même surmonte un joint 62. Dans cette variante, la plaque d'appui 61 et le joint 62 ont chacun une forme en U, les branches du U étant dirigées vers le plancher 11. De la sorte, les bords des pièces de milieu résistif 12a, 12b sont enserrés entre le joint 62 et le corps de la vis du boulon 63.

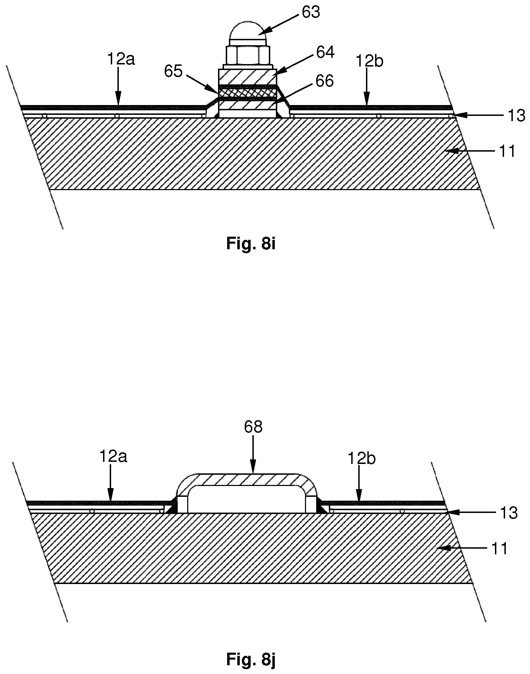

Sur la **figure 8i** est représentée encore une autre variante de la fixation selon la **figure 8a**. Ici, on prévoit deux plaques d'appui 64, 66, et un joint 65. Les bords en regard des pièces de milieu résistif 12a, 12b sont disposées de part et d'autre du joint 65, qui est disposé parallèlement au plancher 11. Ces bords sont par ailleurs enserrés de part et d'autre respectivement par les deux plaques d'appui 64, 66. Le serrage et la fixation de l'ensemble est assuré par un boulon 63 tel que décrit ci-dessus (ou plusieurs).

Sur la **figure 8j** est représenté encore un autre mode de réalisation de l'assemblage de pièces de milieu résistif 12a, 12b entre elles et de fixation de celles-ci au plancher 11. Ce mode de réalisation fait intervenir un canal 68, qui est un profilé en U. Ce canal 68 peut être fixé au plancher 11, par exemple par soudure. Il peut être disposé dans un espace libre du dispositif d'espacement 13. Les pièces de milieu résistif 12a, 12b adjacentes sont fixées au canal 68 le long de celui-ci, par exemple par soudure. On peut prévoir des orifices le long du canal 68, dans la partie de celui-ci située entre les pièces de milieu résistif 12a, 12b et le plancher 11. Ces orifices permettent la libre circulation du fluide dans l'espace situé entre le plancher 11 et la couche de milieu résistif.

La colonne selon l'invention peut être utilisée dans un procédé de chromatographie, d'adsorption ou d'échange d'ions, de préférence dans un procédé de chromatographie multi-colonnes, tel qu'un procédé de lit mobile simulé (SMB), d'échange d'ions continu ou leurs variantes connues de l'homme du métier.

Dans une autre variante, la colonne est utilisée dans un procédé de synthèse chimique sur lit fixe, de préférence dans un procédé catalytique. Les applications ne sont pas limitatives, et la colonne peut être utilisée dans tout procédé connu de l'homme du métier faisant intervenir un contact entre une phase liquide et une phase solide, par exemple en discontinu (batch), en séquentiel, à co-courant, ou à contre-courant.

### EXEMPLES

Les exemples suivants illustrent l'invention sans la limiter.

### Exemple 1

Une colonne circulaire de un mètre de diamètre sur un mètre de haut a été réalisée, un distributeur selon l'invention est utilisé avec différents paramètres.

Dans tous les tests effectués, on utilise une résine cationique forte sous forme calcium, avec une granulométrie moyenne comprise entre 300 et 320 µm. Le dispositif d'espacement du distributeur inférieur est composé d'un grillage de 3 mm de hauteur.

Le dispositif d'espacement du distributeur supérieur est également composé d'un grillage de 3 mm de hauteur. Il assure un espacement entre le plancher et le milieu résistif de 3 mm. L'ensemble est fixé au plancher par un ensemble de vis et de rondelles inox.

Le milieu résistif assure une perte de charge de l'ordre de 15 mbar lors d'un écoulement d'eau à une vitesse de 2 m/h à la température ambiante. Il est composé de deux plaques soudées entre elles.

Les tests d'efficacité sont effectués à différente vitesses par des injections de 600 mL de chlorure de calcium à 0,1 g/L

Les efficacités mesurées du dispositif sont :
- 690 plateaux théoriques à une vitesse de 1 m/h ;
- 515 plateaux théoriques à une vitesse de 2 m/h ; et
- 410 plateaux théoriques à une vitesse de 3 m/h.

### Exemple 2

Dans cet exemple, on reprend le même dispositif expérimental que dans l'exemple 1, à l'exception du milieu résistif lui-même. Sa composition est sensiblement différente, ne présentant pas d'éléments soudés entre eux. La perte de charge engendrée reste de 15 mbar lors d'un écoulement d'eau à une vitesse de 2 m/h à la température ambiante.

Les tests d'efficacité sont effectués à différente vitesses par des injections de 600 mL de chlorure de calcium à 0,1 g/L

Les efficacités mesurées du dispositif sont :
- 660 plateaux théoriques à une vitesse de 1 m/h ;
- 480 plateaux théoriques à une vitesse de 2 m/h ; et
- 400 plateaux théoriques à une vitesse de 3 m/h.

### Exemple 3

Dans cet exemple, on reprend le même dispositif expérimental que dans l'exemple 2, à l'exception de la présence additionnelle d'un déflecteur de 80 mm de diamètre, ayant une épaisseur de 1 mm, et maintenu à 1 mm d'espacement du point d'injection.

Les tests d'efficacité sont effectués à différente vitesses par des injections de 600 mL de chlorure de calcium à 0,1 g/L

Les efficacités mesurées du dispositif sont :
- 670 plateaux théoriques à une vitesse de 1 m/h ;
- 500 plateaux théoriques à une vitesse de 2 m/h ; et
- 420 plateaux théoriques à une vitesse de 3 m/h.

### Exemple 4

Dans cet exemple, on reprend le même dispositif expérimental que dans l'exemple 1, à l'exception du fait que le milieu résistif présente une perte de charge de l'ordre de 10 mbar lors d'un écoulement d'eau à une vitesse de 2 m/h à la température ambiante. Le milieu résistif est fabriqué d'un seul tenant.

Les tests d'efficacité sont effectués à différente vitesses par des injections de 600 mL de chlorure de calcium à 0,1 g/L

Les efficacités mesurées du dispositif sont :
- 615 plateaux théoriques à une vitesse de 1 m/h ;
- 500 plateaux théoriques à une vitesse de 2 m/h ; et
- 415 plateaux théoriques à une vitesse de 3 m/h.

### Exemple 5

Dans cet exemple, on reprend le même dispositif expérimental que dans l'exemple 4, à l'exception du fait que le dispositif d'espacement est constitué par un ensemble de rondelles inox, maintenues par des vis. On assure ainsi un espacement entre le plancher et le milieu résistif de 4,5 mm.

Le milieu résistif présente une perte de charge de l'ordre de 10 mbar lors d'un écoulement d'eau à une vitesse de 2 m/h à la température ambiante. Le milieu résistif est composé de deux plaques soudées entre elles.

Les tests d'efficacité sont effectués à différente vitesses par des injections de 600 mL de chlorure de calcium à 0,1 g/L

Les efficacités mesurées du dispositif sont :
- 660 plateaux théoriques à une vitesse de 1 m/h ;
- 460 plateaux théoriques à une vitesse de 2 m/h ; et
- 365 plateaux théoriques à une vitesse de 3 m/h.

## Revendications

1. Distributeur de fluide (9, 10) pour une colonne (1) comportant au moins une cellule (2) contenant un lit de particules (3), le distributeur de fluide (9, 10) comprenant :
- un plancher (11, 21) comportant au moins un point d'injection (15, 25) assurant une connexion fluidique de part et d'autre de celui-ci ;
- une couche d'un milieu résistif (12, 22) fixée au plancher (11, 21) et formée d'une pluralité de pièces de milieu résistif (31), de préférence de deux à deux cents, et de manière plus particulièrement préférée de cinq à cinquante, juxtaposées sur la face du plancher (11, 21), le milieu résistif étant perméable au fluide ;
- un dispositif d'espacement (13, 23) intercalé entre le plancher (11, 21) et la couche de milieu résistif (12, 22) et maintenant un espacement pour la circulation du fluide entre le plancher (11, 21) et la couche de milieu résistif (12, 22) ; le dispositif d'espacement (13, 23) étant composé de rondelles, de grille(s) ou grillage(s), de supports plats ou de mousses .

2. Distributeur de fluide (9, 10) selon la revendication 1, dans lequel :
- le plancher (11, 21) n'est pas usiné ; et/ou
- le plancher (11, 21) présente un diamètre supérieur à 1 m, de préférence supérieur à 2 m, de plus particulièrement préférée supérieur à 3 m, de manière tout particulièrement préférée supérieur à 4 m.

3. Distributeur de fluide (9, 10) selon l'une des revendications 1 à 2, comprenant des éléments de fixation (14, 17, 24, 27) maintenant l'ensemble formé par la couche de milieu résistif (12, 22) et le dispositif d'espacement (13, 23) contre le plancher (11, 21) ; les éléments de fixation (14, 17, 24, 27) comprenant de préférence des éléments de jonction (40, 41) recouvrant des pièce adjacentes de milieu résistif (31), lesdits éléments de jonction (40, 41) comprenant de manière plus particulièrement préférée au moins une plaque d'appui (43, 43a, 43b) et un joint (44).

4. Distributeur de fluide (9, 10) selon l'une des revendications 1 à 3, dans lequel l'espacement entre le plancher (11, 21) et la couche de milieu résistif (12, 22) est sensiblement constant sur la totalité de la surface du plancher (11, 21) ; et/ou dans lequel le plancher (11, 21) est sensiblement plan, et de préférence le plancher (11, 21) présente des déviations de 0,5 à 5 mm, de préférence de 1 à 4 mm, par rapport à une géométrie plane.

5. Distributeur de fluide (9, 10) selon l'une des revendications 1 à 4, dont la traversée par de l'eau s'écoulant 1 m/h à 20°C induit une perte de charge inférieure ou égale à 1 bar, de préférence inférieure ou égale à 200 mbar, plus particulièrement inférieure ou égale à 50 mbar et idéalement inférieure ou égale à 20 mbar ; et/ou dans lequel le dispositif d'espacement (13, 23) génère une première perte de charge le long de lignes de courant entre le plancher (11, 21) et la couche de milieu résistif (22, 22), une deuxième perte de charge étant générée à la traversée de la couche de milieu résistif (12, 22), et dans lequel la première perte de charge est inférieure à la deuxième perte de charge, de préférence au moins deux fois inférieure, plus particulièrement au moins dix fois inférieure et idéalement au moins cent fois inférieure.

6. Distributeur de fluide (9, 10) selon l'une des revendications 1 à 5, comportant un déflecteur (18) installé en au moins un point d'injection (15, 25); et/ou dans lequel le plancher (11, 21) comporte une pluralité de points d'injection (15, 25), de préférence au moins trois, de manière plus particulièrement préférée au moins cinq.

7. Distributeur de fluide (9, 10) selon l'une des revendications 1 à 6, dans lequel le dispositif d'espacement (13, 23) consiste en une grille ou en des pièces de grille juxtaposées ; et/ou dans lequel les pièces de milieu résistif (31) sont composées d'une ou plusieurs toiles, plaques perforées, poudres et combinaison de celles-ci.

8. Colonne (1) comportant au moins une cellule (2), de préférence une pluralité de cellules (2a, 2b), chaque cellule (2, 2a, 2b) comportant un lit de particules (3, 3a, 3b) avec de part et d'autre un dispositif d'alimentation en fluide (9, 9a, 9b) et un dispositif de collecte de fluide (10, 10a, 10b), au moins l'un de ces dispositifs étant un distributeur de fluide selon l'une des revendications 1 à 7 ; et dans laquelle, de préférence, dans chaque cellule (2), à la fois le dispositif d'alimentation en fluide (9, 9a, 9b) et le dispositif de collecte de fluide (10, 10a, 10b) sont des distributeurs de fluide selon l'une des revendications 1 à 7.

9. Colonne (1) selon la revendication 8, comprenant des conduites de fluides (16, 26) connectées aux points d'injection (15, 25) des distributeurs de fluide (9, 10) et permettant l'amenée de fluide jusqu'à la cellule (2) ou le prélèvement de fluide hors de la cellule (2) ; et/ou dans laquelle les planchers (11, 21) des distributeurs de fluide (9, 9a, 9b, 10, 10a, 10b) sont fixés, et de préférence sont soudés, à des poutres de soutènement (7).

10. Colonne (1) selon l'une des revendications 8 à 10, qui est une colonne de chromatographie, de préférence une colonne de chromatographie en phase liquide ; ou qui est un réacteur chimique.

11. Utilisation de la colonne (1) selon l'une des revendications 8 à 9, dans un procédé de chromatographie, d'adsorption ou d'échange d'ions, de préférence dans un procédé de chromatographie multi-colonnes, tel qu'un procédé de lit mobile simulé ou d'échange d'ions continu ; ou dans un procédé de synthèse chimique sur lit fixe, de préférence dans un procédé catalytique ; ladite utilisation étant de préférence en mode discontinu, séquentiel, à co-courant ou à contre-courant.

12. Procédé d'installation d'un distributeur de fluide (9, 10) dans une colonne (1) comportant au moins une cellule (2) destinée à contenir un lit de particules (3), comprenant :
- la mise en place d'un dispositif d'espacement (13, 23) contre la face interne d'un plancher (11, 21) de la cellule (2), le plancher (11, 21) comportant au moins un point d'injection (15, 25) assurant une connexion fluidique de part et d'autre de celui-ci, le dispositif d'espacement (13, 23) étant composé de rondelles, de grille(s) ou grillage(s), de supports plats ou de mousses ;
- la mise en place d'une couche d'un milieu résistif (12, 22) par-dessus le dispositif d'espacement (13, 23), par juxtaposition de pièces de milieu résistif (31), le milieu résistif étant perméable au fluide ;
- la fixation de la couche d'un milieu résistif (12, 22) sur le plancher (11, 21) de sorte à serrer le dispositif d'espacement (13, 23) entre la couche de milieu résistif (12, 22) et le plancher (11, 21), le dispositif d'espacement (13, 23) maintenant un espacement pour la circulation du fluide entre le plancher (11, 21) et la couche de milieu résistif (12, 22).

13. Procédé selon la revendication 12, dans lequel le distributeur de fluide (9, 10) est selon l'une des revendications 1 à 7 et/ou dans lequel la colonne (1) est selon l'une des revendications 8 à 9.

14. Procédé selon la revendication 12 ou 13, dans lequel la mise en place de la couche d'un milieu résistif (12, 22) comprend l'introduction des pièces de milieu résistif (31) dans la cellule (2) à travers un trou d'homme (8a, 8b) ; les pièces de milieu résistif (31) pouvant de préférence être pliées pour être introduites à travers le trou d'homme (8a, 8b).

15. Procédé selon l'une des revendications 12 à 14, dans lequel la mise en place du dispositif d'espacement (13, 23) et la mise en place de la couche de milieu résistif (12, 22) sont effectuées :
- soit de manière séquentielle, une ou plusieurs pièces de dispositif d'espacement (13, 23) étant d'abord positionnées contre la face interne du plancher (11, 21) puis les pièces de milieu résistif (31) étant fixées par-dessus le dispositif d'espacement (13, 23) ;
- soit de manière simultanée, une ou plusieurs pièces de dispositif d'espacement (13, 23) étant préassemblées avec les pièces de milieu résistif (31) avant le positionnement et la fixation du dispositif d'espacement (13, 23) contre la face interne du plancher (11, 21) conjointement avec la couche de milieu résistif (12, 22).

## Patentansprüche

1. Fluidverteiler (9, 10) für eine Säule (1), aufweisend mindestens eine Zelle (2), die ein Partikelbett (3) enthält, wobei der Fluidverteiler (9, 10) umfasst:
- einen Boden (11, 21), der mindestens einen Einleitungspunkt (15, 25) aufweist, der eine Fluidverbindung beiderseits von diesem sichert;
- eine Schicht aus einem resistiven Medium (12, 22), die auf dem Boden (11, 21) befestigt ist und von einer Vielzahl von Teilen eines resistiven Mediums (31), vorzugsweise von zwei bis zweihundert, und besonders bevorzugt von fünf bis fünfzig, die auf der Fläche des Bodens (11, 21) nebeneinanderliegen, gebildet ist, wobei das resistive Medium fluiddurchlässig ist;
- eine Beabstandungsvorrichtung (13, 23), die zwischen dem Boden (11, 21) und der Schicht eines resistiven Mediums (12, 22) angeordnet ist und einen Abstand für die Zirkulation des Fluids zwischen dem Boden (11, 21) und der Schicht eines resistiven Mediums (12, 22) hält;
wobei die Beabstandungsvorrichtung (13, 23) aus Scheiben, einem Gitter/n oder Gitterwerk/en, flachen Unterlagen oder Schaumstoffen besteht.

2. Fluidverteiler (9, 10) nach Anspruch 1, wobei:
- der Boden (11, 21) nicht bearbeitet ist; und/oder
- der Boden (11, 21) einen Durchmesser über 1 m, vorzugsweise über 2 m, noch vorzugsweiser über 3 m, ganz besonders bevorzugt über 4 m aufweist.

3. Fluidverteiler (9, 10) nach einem der Ansprüche 1 bis 2, umfassend Befestigungselemente (14, 17, 24, 27), die die von der Schicht eines resistiven Mediums (12, 22) und der Beabstandungsvorrichtung (13, 23) gebildete Einheit am Boden (11, 21) halten; wobei die Befestigungselemente (14, 17, 24, 27) vorzugsweise Verbindungselemente (40, 41) umfassen, die benachbarte Teile eines resistiven Mediums (31) bedecken, wobei die Verbindungselemente (40, 41) bevorzugter mindestens eine Stützplatte (43, 43a, 43b) und eine Dichtung (44) umfassen.

4. Fluidverteiler (9, 10) nach einem der Ansprüche 1 bis 3, wobei der Abstand zwischen dem Boden (11,21) und der Schicht eines resistiven Mediums (12, 22) über die gesamte Oberfläche des Bodens (11, 21) etwa konstant ist; und/oder wobei der Boden (11, 21) etwa eben ist, und der Boden (11, 21) vorzugsweise Ablenkungen von 0,5 bis 5 mm, vorzugsweise von 1 bis 4 mm, in Bezug auf eine ebene Geometrie aufweist.

5. Fluidverteiler (9, 10) nach einem der Ansprüche 1 bis 4, wobei die Durchquerung anhand von Wasser, das mit 1 m/h bei 20 °C fließt, einen Lastverlust von unter oder gleich 1 bar, vorzugsweise von unter oder gleich 200 mbar, insbesondere von unter oder gleich 50 mbar und in idealer Weise von unter oder gleich 20 mbar induziert; und/oder wobei die Beabstandungsvorrichtung (13, 23) einen ersten Lastverlust entlang von Strömungslinien zwischen dem Boden (11, 21) und der Schicht eines resistiven Mediums (22, 22) generiert, wobei ein zweiter Lastverlust bei der Durchquerung der Schicht eines resistiven Mediums (12, 22) generiert wird, und wobei der erste Lastverlust kleiner als der zweite Lastverlust, vorzugsweise mindestens zwei Mal kleiner, insbesondere mindestens zehn Mal kleiner und in idealer Weise mindestens zehn Mal kleiner, ist.

6. Fluidverteiler (9, 10) nach einem der Ansprüche 1 bis 5, aufweisend einen Abweiser (18), der in mindestens einem Einleitungspunkt (15, 25) installiert ist; und/oder wobei der Boden (11, 21) eine Vielzahl von Einleitungspunkten (15, 25), vorzugsweise mindestens drei, in besonders bevorzugter Weise mindestens fünf, aufweist.

7. Fluidverteiler (9, 10) nach einem der Ansprüche 1 bis 6, wobei die Beabstandungsvorrichtung (13, 23) aus einem Gitter oder aus nebeneinanderliegenden Gitterteilen besteht; und/oder wobei die Teile eines resistiven Mediums (31) aus einem oder mehreren Geweben, perforierten Platten, Pulvern und Kombination derselben zusammengesetzt sind.

8. Säule (1), aufweisend mindestens eine Zelle (2), vorzugsweise eine Vielzahl von Zellen (2a, 2b), wobei jede Zelle (2, 2a, 2b) ein Partikelbett (3, 3a, 3b) mit beiderseits einer Fluidversorgungsvorrichtung (9, 9a, 9b) und einer Fluidsammelvorrichtung (10, 10a, 10b) aufweist, wobei mindestens eine dieser Vorrichtungen ein Fluidverteiler nach einem der Ansprüche 1 bis 7 ist, und wobei vorzugsweise in jeder Zelle (2) sowohl die Fluidversorgungsvorrichtung (9, 9a, 9b) als auch die Fluidsammelvorrichtung (10, 10a, 10b) Fluidverteiler nach einem der Ansprüche 1 bis 7 sind.

9. Säule (1) nach Anspruch 8, umfassend Fluidleitungen (16, 26), die mit den Einleitungspunkten (15, 25) der Fluidverteiler (9, 10) verbunden sind und die Zufuhr von Fluid bis zu der Zelle (2) oder die Entnahme von Fluid aus der Zelle (2) erlauben; und/oder wobei die Böden (11, 21) der Fluidverteiler (9, 9a, 9b, 10, 10a, 10b) an Stützbalken (7) befestigt und vorzugsweise geschweißt sind.

10. Säule (1) nach einem der Ansprüche 8 bis 10, die eine Chromatographiesäule, vorzugsweise eine Flüssigphasen-Chromatographiesäule ist; oder die ein chemischer Reaktor ist.

11. Verwendung der Säule (1) nach einem der Ansprüche 8 bis 9 in einem Chromatographie-, lonen-Adsorptions- oder Austauschverfahren, vorzugsweise in einem Mehrfachsäulen-Chromatographieverfahren wie einem Verfahren mit einem simulierten beweglichen Bett oder kontinuierlichem lonenaustausch; oder in einem chemischen Syntheseverfahren auf festem Bett, vorzugsweise in einem katalytischen Verfahren; wobei die Verwendung vorzugsweise im diskontinuierlichen, sequentiellen, Gleichstrom- oder Gegenstromverfahren erfolgt.

12. Verfahren zur Installation eines Fluidverteilers (9, 10) in einer Säule (1), aufweisend mindestens eine Zelle (2), die bestimmt ist, ein Partikelbett (3) zu enthalten, umfassend:
- das Platzieren einer Beabstandungsvorrichtung (13, 23) auf der inneren Fläche eines Bodens (11, 21) der Zelle (2), wobei der Boden (11, 21) mindestens einen Einleitungspunkt (15, 25) aufweist, der eine Fluidverbindung beiderseits desselben sichert; wobei die Beabstandungsvorrichtung (13, 23) aus Scheiben, einem Gitter/n oder Gitterwerk/en, flachen Unterlagen oder Schaumstoffen besteht;
- das Platzieren einer Schicht aus einem resistiven Medium (12, 22) über der Beabstandungsvorrichtung (13, 23) durch Nebeneinanderlegen von Teilen eines resistiven Mediums (31), wobei das resistive Medium fluiddurchlässig ist;
- das Befestigen der Schicht eines resistiven Mediums (12, 22) auf dem Boden (11, 21) derart, dass die Beabstandungsvorrichtung (13, 23) zwischen der Schicht eines resistiven Mediums (12, 22) und dem Boden (11, 21) festgespannt wird, wobei die Beabstandungsvorrichtung (13, 23) einen Abstand für die Zirkulation des Fluids zwischen dem Boden (11, 21) und der Schicht eines resistiven Mediums (12, 22) hält.

13. Verfahren nach Anspruch 12, wobei der Fluidverteiler (9, 10) nach einem der Ansprüche 1 bis 7 ist und/oder wobei die Säule (1) nach einem der Ansprüche 8 bis 9 ist.

14. Verfahren nach Anspruch 12 oder 13, wobei das Platzieren der Schicht aus einem resistiven Medium (12, 22) das Einsetzen der Teile eines resistiven Mediums (31) in die Zelle (2) durch ein Mannloch (8a, 8b) umfasst; wobei die Teile eines resistiven Mediums (31) vorzugsweise gefaltet sein können, um durch das Mannloch (8a, 8b) eingesetzt zu werden.

15. Verfahren nach einem der Ansprüche 12 bis 14, wobei das Platzieren der Beabstandungsvorrichtung (13, 23) und das Platzieren der Schicht eines resistiven Mediums (12, 22) durchgeführt werden:
- entweder sequentiell, wobei ein oder mehrere Teile einer Beabstandungsvorrichtung (13, 23) zunächst auf der inneren Fläche des Bodens (11, 21) platziert werden, dann die Teile eines resistiven Mediums (31) über der Beabstandungsvorrichtung (13, 23) befestigt werden;
- oder gleichzeitig, wobei ein oder mehrere Teile einer Beabstandungsvorrichtung (13, 23) mit den Teilen eines resistiven Mediums (31) vor der Positionierung und der Befestigung der Beabstandungsvorrichtung (13, 23) auf der inneren Fläche des Bodens (11, 21) gemeinsam mit der Schicht eines resistiven Mediums (12, 22) vormontiert werden.

## Claims

1. A fluid distributor (9, 10) for a column (1) including at least one cell (2) containing a bed of particles (3), the fluid distributor (9, 10) comprising:
- a floor (11, 21) including at least one injection point (15, 25) ensuring a fluidic connection on either side thereof;
- a resistive medium layer (12, 22) attached to the floor (11, 21) and formed with a plurality of resistive medium parts (31), preferably from two to two hundred, and more preferably from five to fifty, juxtaposed on a face of the floor (11, 21), the resistive medium being permeable to the fluid;
- a spacing device (13, 23) inserted between the floor (11, 21) and the resistive medium layer (12, 22) and maintaining a spacing for fluid circulation between the floor (11, 21) and the resistive medium layer (12, 22); the spacing device (13, 23) being composed of washers, grid(s) or grating(s), flat supports or foams.

2. The fluid distributor (9, 10) according to claim 1, wherein:
- the floor (11, 21) is not machined; and/or
- the floor (11, 21) has a diameter greater than 1 m, preferably greater than 2 m, more preferably greater than 3 m, most preferably greater than 4 m.

3. The fluid distributor (9, 10) according to one of claims 1 to 2, comprising attachment elements (14, 17, 24, 27) maintaining the assembly formed by the resistive medium layer (12, 22) and the spacing device (13, 23) against the floor (11, 21); the attachment elements (14, 17, 24, 27) preferably comprising junction elements (40, 41) covering adjacent resistive medium parts (31) said junction elements (40, 41) more preferably comprising at least one supporting plate (43, 43a, 43b) and a joint (44).

4. The fluid distributor (9, 10) according to one of claims 1 to 3, wherein the spacing between the floor (11, 21) and the resistive medium layer (12, 22) is substantially constant over the totality of the surface of the floor (11, 21), and/or wherein the floor (11, 21) is substantially planar, and preferably the floor (11, 21) has deviations from 0.5 to 5 mm, preferably from 1 to 4 mm, with respect to a planar geometry.

5. The fluid distributor (9, 10) according to one of claims 1 to 4, wherein water flowing through the distributor at 1 m/h at 20°C induces a pressure drop of less than or equal to 1 bar, preferably less than or equal to 200 mbar, more particularly less than or equal to 50 mbar and ideally less than or equal to 20 mbar; and/or wherein the spacing device (13, 23) generates a first pressure drop along current lines between the floor (11, 21) and the resistive medium layer (22, 22), a second pressure drop being generated in the resistive medium layer (12, 22), and wherein the first pressure drop is less than the second pressure drop, preferably at least twice less, more particularly at least ten times less and ideally at least one hundred times less.

6. The fluid distributor (9, 10) according to one of claims 1 to 5, comprising a deflector (18) placed in at least one injection point (15, 25); and/or wherein the floor (11, 21) includes a plurality of injection points (15, 25), preferably at least three, most preferably at least five.

7. The fluid distributor (9, 10) according to one of claims 1 to 6, wherein the spacing device (13, 23) consists in a grid or in juxtaposed grid parts; and/or wherein the resistive medium parts (31) are composed of one or several webs, perforated plates, powders and a combination thereof.

8. A column (1) including at least one cell (2), preferably a plurality of cells (2a, 2b), each cell (2, 2a, 2b) including a bed of particles (3, 3a, 3b) with a fluid supply device (9, 9a, 9b) and a fluid collection device (10, 10a, 10b) on either side, at least one of these devices being a fluid distributor according to one of claims 1 to 7; and preferably wherein in each cell (2), both the fluid supply device (9, 9a, 9b) and the fluid collection device (10, 10a, 10b) are fluid distributors according to one of claims 1 to 7.

9. The column (1) according to claim 8, comprising fluid conduits (16, 26) connected to the injection points (15, 25) of the fluid distributors (9, 10) and allowing fluid to be brought to the cell (2) or fluid to be collected from the cell (2) and/or wherein the floors (11, 21) of the fluid distributors (9, 9a, 9b, 10, 10a, 10b) are attached, and preferably welded to supporting beams (7).

10. The column (1) according to one of claims 8 to 10, which is a chromatography column, preferably a liquid phase chromatographic column; or which is a chemical reactor.

11. The use of the column (1) according to one of claims 8 to 9, in a chromatography, ion adsorption or exchange process, preferably in a multi-column chromatographic process such as a simulated moving bed process or a continuous ion exchange process; or in a chemical synthesis process on a fixed bed, preferably in a catalytic process; said use preferably being in a batch, sequential, co-current or counter-current mode.

12. A method for setting up a fluid distributor (9, 10) in a column (1) including at least one cell (2) intended to contain a bed of particles (3), comprising:
- setting into place a spacing device (13, 23) against the internal face of a floor (11, 21) of the cell (2), the floor (11, 21) including at least one injection point (15, 25) ensuring fluidic connection on either side thereof, the spacing device (13, 23) being composed of washers, grid(s) or grating(s), flat supports or foams;
- setting into place a resistive medium layer (12, 22) above the spacing device (13, 23), by juxtaposing resistive medium parts (31), the resistive medium being permeable to the fluid;
- attaching the resistive medium layer (12, 22) on the floor (11, 21) so as to secure the spacing device (13, 23) between the resistive medium layer (12, 22) and the floor (11, 21), the spacing device (13, 23) maintaining a space for fluid circulation between the floor (11, 21) and the resistive medium layer (12, 22).

13. The method according to claim 12, wherein the fluid distributor (9, 10) is according to one of claims 1 to 7 and/or wherein the column (1) is according to one of claims 8 to 9.

14. The method according to claim 12 or 13, wherein the setting into place of the resistive medium layer (12, 22) comprises introducing the resistive medium parts (31) into the cell (2) through a manhole (8a, 8b); the resistive medium parts (31) being preferably folded so as to be introduced through the manhole (8a, 8b).

15. The method according to one of claims 12 to 14, wherein the setting into place of the spacing device (13, 23) and the setting into place of the resistive medium layer (12, 22) are carried out:
- either sequentially, one or several parts of the spacing device (13, 23) being first positioned against the internal face of the floor (11, 21) and then the resistive medium parts (31) being attached above the spacing device (13, 23);
- or simultaneously, one or several spacing device parts (13, 23) being pre-assembled with the resistive medium parts (31) before positioning and attaching the spacing device (13, 23) against the internal face of the floor (11, 21) together with the resistive medium layer (12, 22).
